# EUROPÄISCHE PATENTSCHRIFT

(11) **EP 2 100 760 B1**
(45) Veröffentlichungstag und Bekanntmachung des Hinweises auf die Patenterteilung: **22.08.2018**
(21) Anmeldenummer: 09003068.5
(22) Anmeldetag: 04.03.2009
(51) Int. Cl.: B60J 7/12

(54) **Leiste zum Anbringen von Verdeckstoff an einen Verdeckspannbügel und Verdeck mit einer Leiste**
Profile for attaching covering material to a tensioning bow and covering with a profile
Baguette d'application de tissu textile sur un arceau de tension de capote et capote dotée d'une baguette

(30) Priorität: 12.03.2008 DE 102008013894
(43) Veröffentlichungstag der Anmeldung: 16.09.2009
(73) Patentinhaber: Valmet Automotive Oy, 23500 Uusikaupunki (FI)
(72) Erfinder: Kreiling, Nils, 49080 Osnabrück (DE)
(74) Vertreter: Kronthaler, Schmidt & Coll.

(56) Entgegenhaltungen:
- EP-A1- 1 393 948
- DE-B3- 10 331 407
- DE-B3-102006 036 658
- DE-C1- 4 441 669
- DE-U1- 9 102 147
- US-A- 5 765 903

## Beschreibung

Die Erfindung betrifft eine Leiste zum Anbringen von Verdeckstoff an einen Verdeckspannbügel und ein Verdeck mit einer Leiste.

Die Verdeckgestängeteile eines Cabrioletfahrzeugs sind üblicherweise aus mehreren miteinander gelenkig verbundenen Bauteilen gebildet. Eines dieser Bauteile ist der sogenannte Verdeckspannbügel. Dieser ist in Fahrzeugrichtung gesehen der hinterste Teil des Verdecks und spannt bei geschlossenem Verdeck den Verdeckstoff über einen Fahrgastinnenraum. Das in Fahrzeugvorwärtsfahrtrichtung (Fahrzeugrichtung) gesehen hinterste Ende des Verdeckstoffs wird üblicherweise an eine Kunststoffleiste angenäht. Diese Leiste wird mit dem angenähten Verdeckstoff von schräg hinten unten in einen Aufnahmeraum, der in dem Verdeckspannbügel gebildet ist, eingesteckt. Bei geschlossenem Verdeck wird die Leiste allein durch die Verdeckstoffspannung in den Spannbügel hineingezogen und so in ihrer Lage gesichert. Bei geöffnetem Verdeck besteht das Problem, dass die Leiste mit dem angenähtem Verdeckstoff keine Zugspannung erfährt und somit nicht mehr in den Aufnahmeraum hineingezogen wird. Um auch bei geöffnetem Verdeck und dementsprechend entspanntem Verdeckstoff die Leiste in ihrer Lage innerhalb des Spannbügels zu sichern, wurden verschiedene Vorrichtungen entwickelt.

Die EP 0 713 796 B1 offenbart ein Faltverdeck, bei dem ein Anzugsstreifen an einer Innenseite eines Verdeckbezugs bzw. eines Verdeckstoffs befestigt wird. Der Anzugsstreifen ist an seinem freien Ende mit einem federnden Spreizglied verbunden, das verrastend in eine Längsnut, die in die in dem Spannbügel gebildet ist, einsetzbar ist. Ein Schnapphaken des Spreizglieds hintergreift eine Nase der Längsnut. Das Spreizglied ist mit dem freien Ende des Anzugsstreifens vernäht oder verklebt.

Die DE 41 12 256 C3 offenbart ein Klapp- bzw. Faltverdeck, bei dem ein Ende des Verdeckbezugs über eine hintere Kante des Spannbügels gezogen wird. Der Verdeckstoff wird mit Hilfe von Formleisten aus Kunststoff mit dem Spannbügel verschraubt. Dabei wird die Formleiste an den Verdeckstoff genäht. Ein Einfassband umschließt diesen Nahtbereich.

Aus der DE 91 02 147 U1 ist eine Haltevorrichtung für ein Verdeck eines Cabriolet-Fahrzeugs bekannt, die ein mit einem Verdeckstoff verbundenes Verbindungsprofil aufweist. Das Verbindungsprofil ist wiederum mit einem Hakenprofil ausgeführt, über welches das Verbindungsprofil an einem mit einem Hohlprofil ausgeführten u-förmigen Bügel anordenbar ist.

Eine Aufgabe der Erfindung ist es, eine Leiste anzugeben, bei der die Gefahr, dass die Haltevorrichtung von der Leiste abbrechen kann, verringert ist.

Diese Aufgabe wird durch eine Leiste gemäß Patentanspruch 1 und ein Verdeck gemäß Patentanspruch 11 gelöst. Weitere vorteilhafte Ausführungsformen der Erfindung sind in den abhängigen Ansprüchen angegeben.

Dadurch, dass bei der erfindungsgemäßen Leiste mehrere Haltevorrichtungen vorgesehen sind und jede der Haltevorrichtungen in einer Ausnehmung der Leiste vorgesehen ist, ist die Gefahr, dass die Haltevorrichtung von der Leiste abbrechen kann, verringert.

Der Erfindung liegt die Idee zugrunde, eine Leiste so integral mit einer Haltevorrichtung auszubilden, dass die Leiste einfach an einem Spannbügel angebracht werden kann. Einfach ist in diesem Zusammenhang so zu verstehen, dass es möglich ist, die Leiste an dem Spannbügel durch lediglich Einbringen der Haltevorrichtung in den Spannbügel anzubringen. Daher bedarf es keiner weiteren Bauteile zum Befestigen und die Leiste kann mit wenigen Arbeitsschritten befestigt werden. Berücksichtigt wurde dabei auch, dass eine Möglichkeit gegeben ist, die Leiste einfach herzustellen, indem die Leiste und die Haltevorrichtung gemeinsam, d.h. integral, durch beispielsweise bekannte Kunststoffformverfahren gefertigt werden können.

Vorteilhafterweise weist eine Leiste zum Anbringen von Verdeckstoff bzw. -bezug an einen Spannbügel eines Verdecks eines Cabrioletfahrzeugs zumindest eine Haltevorrichtung auf, die integral mit der Leiste ausgebildet ist.

Vorteilhafterweise ist die Haltevorrichtung ein Clip, wodurch eine einfache Herstellung gegeben ist.

Vorteilhafterweise weist die Haltevorrichtung eine Wölbung auf und ist derart verformbar, dass sie sich in einem Zustand, in dem sie in einen in dem Verdeckspannbügel ausgebildeten Aufnahmeraum eingebracht ist, an eine Wand des Aufnahmeraums andrückt bzw. anpresst und so dafür sorgt, dass sich die Haltewirkung verstärkt und die Leiste, insbesondere bei geöffnetem Verdeck, besonders gut gehalten wird.

Vorteilhafterweise sind mehrere Haltevorrichtungen und mehrere Ausnehmungen vorgesehen, wobei die Ausnehmungen gleichmäßig voneinander beabstandet an der Leiste angeordnet sein könne, wodurch die Leiste sicher an mehreren Stellen in dem Aufnahmeraum gehalten werden kann.

Vorteilhafterweise ist die Leiste zumindest teilweise in einen in dem Verdeckspannbügel ausgebildeten Aufnahmeraum einbringbar und weist zumindest eine Halteklammer als ein zusätzliches Sicherungsmittel oder entsprechendes herkömmliches Sicherungsmittel zum Halten der Leiste in dem Aufnahmeraum auf, wodurch eine zusätzliche Verstärkung der Haltewirkung erreicht wird. Allerdings sind solche Halteklammern bzw. Sicherungsmittel in weniger hoher Anzahl als bisher erforderlich.

Vorteilhafterweise ist die Halteklammer derart an der Leiste vorgesehen, dass sie in einem Zustand, in dem die Leiste in dem Aufnahmeraum eingebracht ist, die Leiste mit ihren Schenkeln festhält, wodurch die Leiste besonders gut in dem Aufnahmeraum gehalten wird.

Vorteilhafterweise ist ein Vorsprung an der Leiste vorgesehen, der sich in einer im Wesentlichen Längsrichtung der Leiste erstreckt, wodurch eine maximale Einbringtiefe der Leiste in den Spannbügel festlegbar ist.

Vorteilhafterweise ist die Leiste aus wenigstens zwei Leistenabschnitten in Längsrichtung der Leiste gebildet, wodurch ermöglicht wird nur einzelne Teile der Leiste auszutauschen.

Vorteilhafterweise ist die Leiste dazu angepasst, mit einem Verdeckstoff vernäht zu werden, so dass die Leiste schneller an einen Spannbügel eines Verdecks angebracht werden kann als bei einem Verkleben der Bauteile, da nicht abgewartet werden muss, bis das Klebemittel getrocknet bzw. ausgehärtet ist.

Vorteilhafterweise weist ein Verdeck für ein Cabrioletfahrzeug einen Spannbügel auf, der einen Aufnahmeraum bildet, der zum Aufnehmen einer der vorstehend genannten Leisten angepasst ist, wodurch ein Verdeck angegeben ist, bei dem in einfacher Weise ein Verdeckstoff an einen Spannbügel angebracht werden kann. Dies wird besonders erleichtert, wenn der Verdeckstoff mit der Leiste vernäht ist.

Weitere Merkmale und Zweckmäßigkeiten der Erfindung ergeben sich aus der Beschreibung einer beispielhaften Ausführungsform anhand der Figuren, von denen zeigen:
- Fig. 1: eine perspektivische Ansicht eines Verdecks von hinten,
- Fig. 2: eine perspektivische Ansicht einer Leiste von hinten,
- Fig. 3: eine vergrößerte perspektivische Ansicht der Leiste von vorne
- Fig. 4: eine vergrößerte perspektivische Ansicht der Leiste von hinten,
- Fig.5: eine vergrößerte Schnittansicht durch einen Spannbügel mit angebrachtem Verdeckbezug, wobei der Schnitt nicht durch eine Haltevorrichtung der Leiste verläuft und
- Fig.6: eine weitere vergrößerte Schnittansicht durch einen Spannbügel mit angebrachtem Verdeckbezug, wobei der Schnitt durch eine Haltevorrichtung der Leiste verläuft.

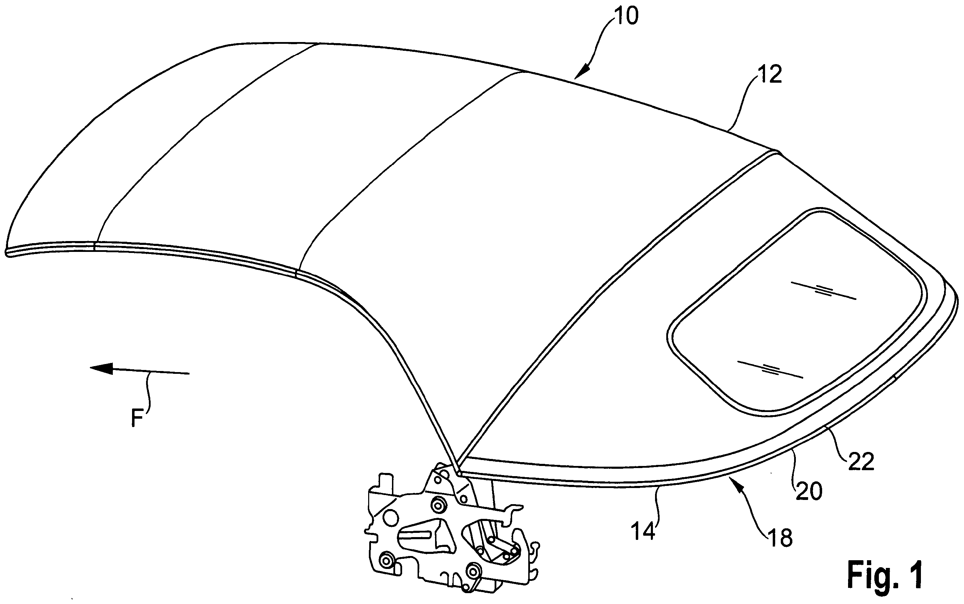

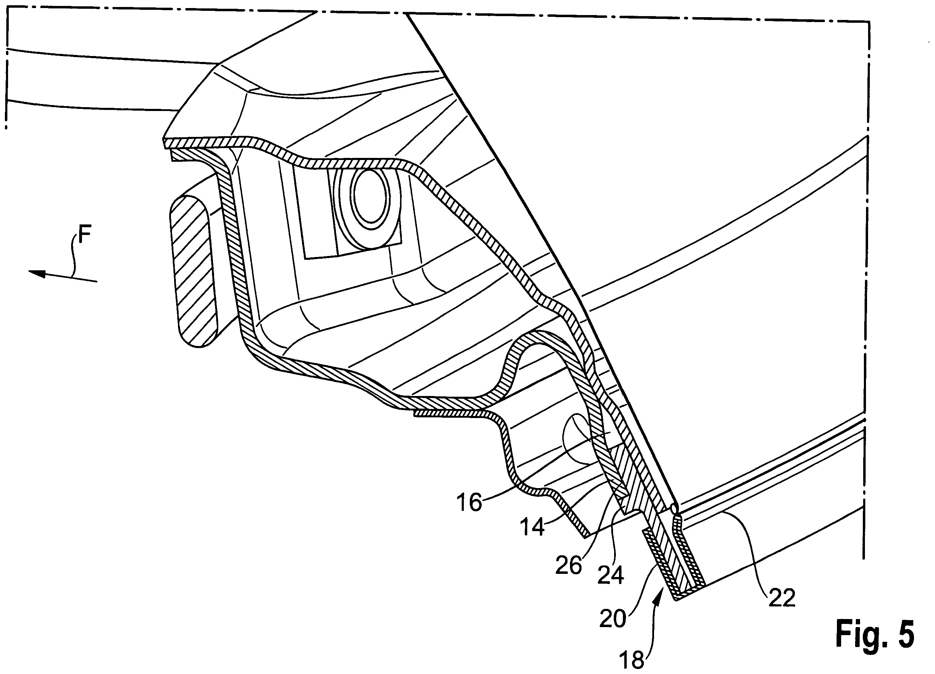

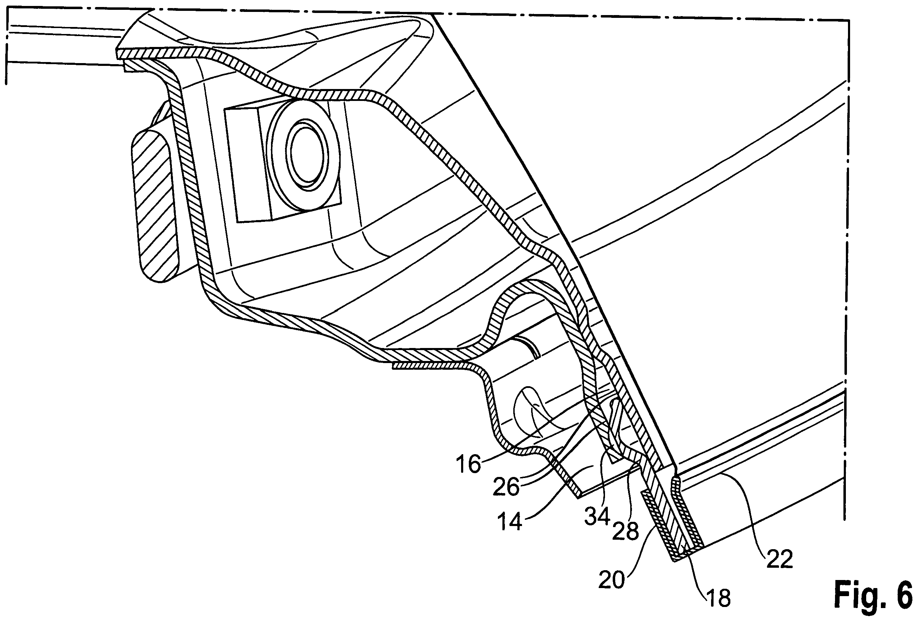

Fig. 1 zeigt eine perspektivische Ansicht eines erfindungsgemäßen Verdecks 10 für ein Cabrioletfahrzeug von hinten. Dabei ist die Fahrzeugvorwärtsfahrtrichtung (Fahrzeugrichtung) durch einen Pfeil F angegeben. Das Verdeck weist einen Verdeckbezug bzw. Verdeckstoff 12 auf. Das verdeck 10 weist weiter einen Spannbügel 14 auf. Der Spannbügel 14 bildet einen Aufnahmeraum 16 (Fig. 5 und 6) für eine Leiste 18. Ein in Fahrzeugrichtung gesehen hinteres Ende 20 des Verdeckstoffs 12 ist um die Leiste 18 herum geführt und mit dieser vernäht, wie durch eine Naht 22 angegeben ist.

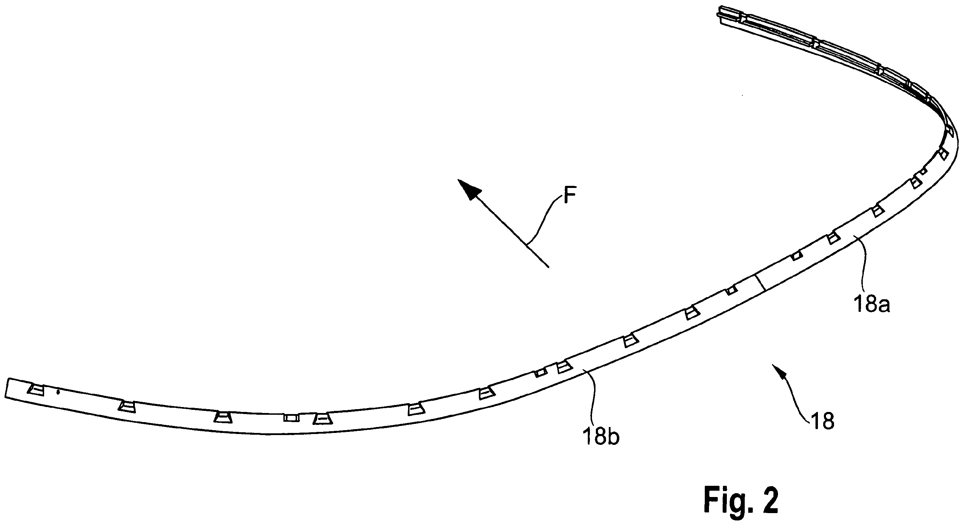

Fig. 2 zeigt eine perspektivische Ansicht der erfindungsgemäßen Leiste 18 von hinten. Die Leiste 18 weist zwei Leistenabschnitte 18a, 18b auf, die getrennt gefertigt werden. Dabei weist der eine Leistenabschnitt 18a der Leiste 18 einen sich verjüngenden Bereich auf, auf den der andere Leistenabschnitt 18b der Leiste 18 dann für die Endfertigung überlappend gesteckt wird. Eine feste Verbindung zwischen den beiden Leistenabschnitten 18a, 18b kann durch Schweißen, Kleben oder dergleichen erreicht werden.

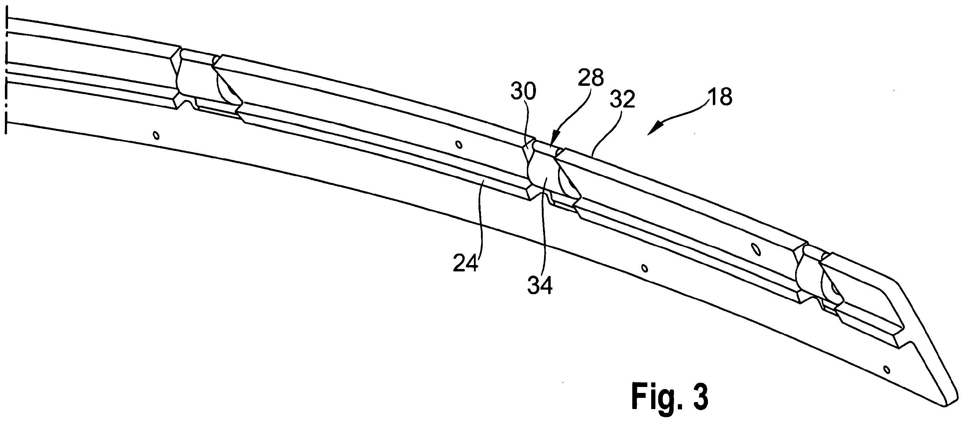

Wie der Fig. 3 zu entnehmen ist, die eine perspektivische Ansicht der Leiste 18 von vorne ist, weist die Leiste 18 einen im Wesentlichen quaderförmigen Querschnitt auf. Ferner weist die Leiste 18 einen Ansatz bzw. Vorsprung 24 auf, der sich im Wesentlichen in einer Längserstreckungsrichtung der Leiste 18 in Querrichtung zur Einschubrichtung der Leiste 18 in den Aufnahmeraum 16 erstreckt.

Die Leiste 18 weist weiter integral damit gebildete Clips 28 und Ausnehmungen 30 auf. Die Leiste 18 und der vorsprung 24 sind durch die voneinander gleichmäßig beabstandet angeordneten Ausnehmungen 30 unterbrochen, wobei die Clips 28 in den Ausnehmungen 30 angeordnet sind. Die Clips 28 sind relativ zu angrenzenden Leistenteilen verformbar, vorzugsweise elastisch verformbar. Die Clips 28 und der Vorsprung 24 sind integral mit der Leiste 18 ausgebildet, d.h. einstückig und materialeinheitlich, z.B. aus Kunststoff, verstärktem Kunststoff oder dergleichen. Die Ausnehmungen 30 unterbrechen die Längsstreckung der Leiste 18 dabei in einem Bereich 32 der Leiste 18, der der Bereich ist, der vorgesehen ist, in den Aufnahmeraum 16 eingebracht zu werden. Die Clips 28 dienen als Haltevorrichtung für die Leiste 18, wenn die Leiste 18 an dem Spannbügel 14 angebracht wird, und weisen eine gewisse Flexibilität, insbesondere gegenüber angrenzenden Leistenteilen, auf, die z.B. dadurch erreicht wird, dass die Clips 28 über ein Scharnier mit verdünntem Material mit dem restlichen Teil der Leiste 18 verbunden sind. Die Clips 28 sind mit einer konvexen Wölbung bzw. Biegung 34 ausgebildet, wobei die Wölbung 34 im Wesentlichen in die gleiche Richtung wie der Vorsprung 24 gerichtet ist.

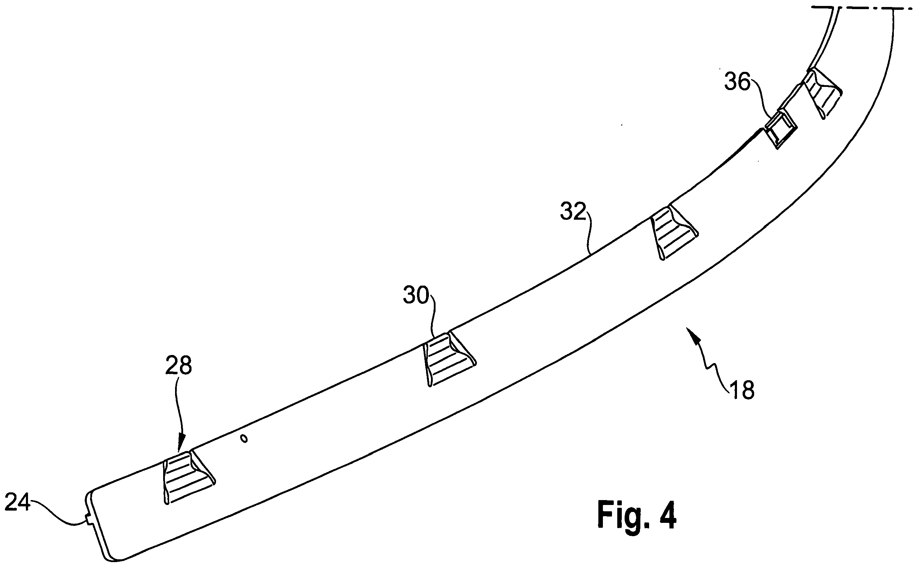

Die Fig. 4 zeigt eine perspektivische Ansicht der Leiste 18 von hinten. Die Leiste 18 weist Klammern 36 auf, von denen eine gezeigt ist und die auf die Leiste 18 gesteckt sind oder integral mit dieser ausgebildet sind. Die Klammern 36 dienen als zusätzliche Haltevorrichtung neben den Clips 28 für die Leiste 18, wenn die Leiste 18 in den Aufnahmeraum 16 des Spannbügels 14 gesteckt wird. Die Klammern 36 sind derart vorgesehen, dass sie zwischen den Clips 28 befindlich angeordnet sind. Insbesondere sind die Klammern 36 so auf die Leiste 18 gesteckt, dass ihre Schenkel die Leiste 18 fest umklammern können.

Fig. 5 zeigt eine vergrößerte Schnittansicht durch den Spannbügel 14, wobei die Leiste 18 in den Aufnahmeraum 16 des Spannbügels gesteckt ist. Der Aufnahmeraum 16 ist in der Form einer Längsnut und erstreckt sich im Wesentlichen in einer Fahrzeugquerrichtung. Der Vorsprung 24 dient dabei zum Definieren einer Relativlage zwischen der Leiste 18 und dem Spannbügel 14. Genauer gesagt kann die Leiste 18 nur bis zu ihrem Vorsprung 24 in den Aufnahmeraum 16 eingesteckt werden, da dieser durch Anstoßen an eine wand 26 des Aufnahmeraums 16 ein weiteres Einschieben in den Aufnahmeraum 16 verhindert. Bei geschlossenem Verdeck 10 wird durch die Spannung bzw. die Straffung des verdeckstoffs 12 die Leiste 18 in den Aufnahmeraum 16 hineingezogen. Bei geöffnetem verdeck kann sich die Leiste 18 aber auf Grund der nicht mehr vorhandenen Spannung durch den Verdeckstoff 12 aus dem Aufnahmeraum 16 heraus bewegen.

Fig. 6 zeigt eine vergrößerte Schnittansicht durch den Spannbügel 14, wobei der Schnitt durch einen der Clips 28 verläuft. Insbesondere befinden sich in dem eingesteckten Zustand der Leiste 18 die Clips 28 in dem Aufnahmeraum 16. Die Clips 28 drücken sich mit der Wölbung 34 und ihrem freien Ende an wände 26 des Aufnahmeraums 16. Dadurch verhindern die Clips 28, dass sich bei geöffneten Verdeck 10 bzw. entspanntem Verdeckstoff 12, die Leiste 18 aus dem Aufnahmeraum 16 entfernen kann. In diesem Zustand, in dem die Leiste 18 in den Aufnahmeraum 16 gesteckt ist, werden die Schenkel der Klammern 36 durch die Wände 26 des Aufnahmeraums 16 fest an die Leiste 18 gedrückt. Dadurch unterstützen die Klammern 36 die Clips 28, die Leiste 18 in dem Aufnahmeraum 16 zu halten.

Für ein Wechseln des Verdeckstoffs 12, beispielsweise aufgrund einer Beschädigung des Stoffs, kann durch eine entsprechend leichte Krafteinwirkung bei entspanntem Verdeckstoff 12 die Leiste 18 zusammen mit den Klammern 36 aus dem Aufnahmeraum 16 und damit aus dem Spannbügel 14 gezogen werden.

Ist es erforderlich die Leiste 18 zu wechseln, beispielsweise auf Grund einer Beschädigung der Leiste 18, ist es lediglich erforderlich, die Naht 22 aufzutrennen. Da der Verdeckstoff 12 nicht mit der Leiste 18 verklebt ist, müssen bei einem Wechsel der Leiste 18 auch keine Klebstoffreste entfernt werden.

Die Klammer ist als optionale, zusätzliche Sicherung für die Leiste anzusehen. Die Anzahl der Klammern kann nach Bedarf im Hinblick auf den jeweiligen Spannbügel, in den die Leiste eingebracht werden soll, festgelegt werden.

Die Leiste kann einstückig oder aus mehr als zwei Leistenabschnitten gebildet werden. Die Leiste kann aus einem Material nach Bedarf gefertigt sein und ist nicht auf Kunststoff eingeschränkt. Ein Aufbau der Leiste aus jedem Material, das die nötige Stabilität der Leiste gewährleistet und nähbar ist, ist denkbar und nicht auf die oben angegebenen Kunststoffarten beschränkt. Blech oder Leichtmetall, Metall und Legierungen davon für die Leiste sind ebenso möglich. Allerdings sind diese Materialien bislang nicht nähbar, so dass die Leiste entsprechend vorgefertigte Löcher aufweisen muss, die von einer Nadel zum Verhähren durchdrungen werden. Die Nähmaschine arbeitet dabei mit einer vorgegeben Lochweite, die den Abständen der Löcher der Leiste entspricht. Auch ein Verkleben des Verdeckstoffs mit der Leiste ist möglich, ist aber auf Grund der Wartezeit für das Aushärten bzw. Trocknen des Klebemittels nicht bevorzugt.

Die Ausnehmung müssen nicht gleichmäßig beabstandet angeordnet sein. Ein Anordnen der Ausnehmungen und die Festlegung ihrer Anzahl sind nach Bedarf möglich.

Denkbar ist auch, dass die Wände des Aufnahmeraums eine dem Clip komplementäre Form, d.h. auch eine Wölbung, aufweisen, in die die Wölbung der Clips beim Einstecken der Leiste verrasten können, so dass damit die Haltewirkung noch weiter verstärkt wird. Die Zahl der Clips kann nach Bedarf im Hinblick auf den jeweiligen Spannbügel, in die Leiste eingebracht werden soll, festgelegt werden. Die Clips können nur einmal beim Einbringen in den Aufnahmeraum verformbar sein, d.h. sich plastisch verformen, so dass sie bei einem Entfernen der Leiste aus dem Aufnahmeraum abbrechen oder anderweitig zu zerstören sind.

Der hintere Bereich des Verdeckstoffs, der um die Leiste geführt ist, kann zusätzlich von einem Einfassband umgeben sein, das mit dem Verdeckstöff und der Leiste vernäht oder verschraubt wird.

## Patentansprüche

1. Leiste (18) zum Anbringen von Verdeckstoff (12) an einen Spannbügel (14) eines Verdecks (10) eines Cabrioletfahrzeugs, wobei die Leiste zumindest eine Haltevorrichtung (28) aufweist, die integral mit der Leiste ausgebildet ist, **dadurch gekennzeichnet, dass** bei der Leiste (18) mehrere Haltevorrichtungen (28) vorgesehen sind und jede der Haltevorrichtungen (28) in einer Ausnehmung (30) der Leiste (18) vorgesehen ist.

2. Leiste (18) nach Anspruch 1, bei der die Haltevorrichtung (28) ein Clip (28) ist.

3. Leiste (18) nach Anspruch 2, bei der die Haltevorrichtung (28) eine Wölbung (34) aufweist und derart verformbar ist, dass sie sich in einem Zustand, in dem sie in einen in dem Verdeckspannbügel (14) ausgebildeten Aufnahmeraum (16) eingebracht ist, an eine Wand (26) des Aufnahmeraums (16) andrückt.

4. Leiste (18) nach einem der Ansprüche 1 bis 3, bei der mehrere Haltevorrichtungen (28) und mehrere Ausnehmungen (30) vorgesehen sind, wobei die Ausnehmungen (30) gleichmäßig voneinander beabstandet an der Leiste (18) angeordnet sind.

5. Leiste (18) nach einem der vorhergehenden Ansprüche, wobei die Leiste (18) zumindest teilweise in einen in dem Verdeckspannbügel (14) ausgebildeten Aufnahmeraum (16) einbringbar ist, und die zumindest eine Halteklammer (36) als ein zusätzliches Sicherungsmittel zum Halten der Leiste (18) in dem Aufnahmeraum (16) aufweist.

6. Leiste (18) nach Anspruch 5, bei der die Halteklammer (36) derart an der Leiste (18) vorgesehen ist, dass sie in einem Zustand, in dem die Leiste (18) in dem Aufnahmeraum (16) eingebracht ist, die Leiste (18) mit ihren Schenkeln festhält.

7. Leiste (18) nach einem der vorhergehenden Ansprüche, bei der ein Vorsprung (24) vorgesehen ist, der sich in einer im Wesentlichen Längsrichtung der Leiste (18) erstreckt.

8. Leiste (18) nach einem der vorhergehenden Ansprüche, die aus wenigstens zwei Leistenabschnitten (18a, 18b) in Längsrichtung der Leiste (18) gebildet ist.

9. Leiste (18) nach einem der vorhergehenden Ansprüche, die dazu angepasst ist, mit einem Verdeckstoff (12) vernäht zu werden.

10. Verdeck (10) für ein Cabrioletfahrzeug, das einen Spannbügel (14) aufweist, wobei der Spannbügel (14) einen Aufnahmeraum (16) bildet, der zum Aufnehmen einer Leiste (18) nach einem der vorhergehenden Ansprüche angepasst ist.

11. Verdeck (10) nach Anspruch 10, mit einem Verdeckstoff (12), der mit der Leiste (18) vernäht ist.

## Claims

1. A profile (18) for attaching a covering material (12) to a tensioning bow (14) of a hood (10) of a convertible vehicle, said profile comprising at least one holding device (28) integrally formed with the profile, **characterised in that** a plurality of holding devices (28) are provided for the profile (18) and each of said holding devices (28) is provided in a recess (30) of the profile (18).

2. The profile (18) according to claim 1, wherein the holding device (28) is a clip (28).

3. The profile (18) according to claim 2, wherein the holding device (28) has a curvature (34) and is deformable such that, in a state in which it is inserted into a receiving space (16) formed in the tensioning bow (14), it presses against a wall (26) of the receiving space (16).

4. The profile (18) according to any one of claims 1 to 3, wherein a plurality of holding devices (28) and a plurality of recesses (30) are provided, with the recesses (30) being equidistantly arranged on the profile (18).

5. The profile (18) according to any one of the preceding claims, wherein the profile (18) can be inserted at least partially into a receiving space (16) formed in the tensioning bow (14), and comprises the at least one holding bracket (36) as an additional securing means for holding the profile (18) in the receiving space (16).

6. The profile (18) according to claim 5, wherein the holding bracket (36) is provided on the profile (18) such that, in a state in which the profile (18) is inserted into the receiving space (16), the arms of the holding bracket (36) hold the profile (18) in place.

7. The profile (18) according to any one of the preceding claims, wherein a projection (24) is provided which extends in a substantially longitudinal direction of the profile (18).

8. The profile (18) according to any one of the preceding claims, which is constituted by at least two profile portions (18a, 18b) in the longitudinal direction of the profile (18).

9. The profile (18) according to any one of the preceding claims, which is adapted to be sewn together with a covering material (12).

10. A hood (10) for a convertible vehicle which comprises a tensioning bow (14), wherein the tensioning bow (14) forms a receiving space (16) adapted to accommodate a profile (18) according to any one of the preceding claims.

11. The hood (10) according to claim 10, comprising a covering material (12) which is sewn together with the profile (18).

## Revendications

1. Baguette (18) pour l'application d'un tissu textile (12) sur un étrier de tension (14) d'une capote (10) d'un véhicule cabriolet, ladite baguette comportant au moins un dispositif de retenue (28) réalisé de manière intégrale avec ladite baguette, **caractérisée en ce que** l'on prévoit plusieurs dispositifs de support (28) pour la baguette (18), chacun des dispositifs de support (28) étant prévu dans un évidement (30) de la baguette (18).

2. Baguette (18) selon la revendication 1, où le dispositif de retenue (28) est un clip (28).

3. Baguette (18) selon la revendication 2, où le dispositif de retenue (28) présente une courbure (34) et est déformable de sorte que, dans un état inséré dans un espace de logement (16) réalisé dans l'étrier de tension (14), le dispositif de retenue (28) s'applique contre une paroi (26) de l'espace de logement (16).

4. Baguette (18) selon l'une quelconque des revendications 1 à 3, où l'on prévoit plusieurs dispositifs de support (28) et plusieurs évidements (30), les évidements (30) étant espacés régulièrement sur la baguette (18).

5. Baguette (18) selon l'une quelconque des revendications précédentes, ladite baguette (18) pouvant être insérée au moins partiellement dans un espace de logement (16) réalisé dans l'étrier de tension (14), et comportant ledit au moins un clip de fixation (36) en tant que moyen de retenue additionnel pour retenir la baguette (18) dans l'espace de logement (16).

6. Baguette (18) selon la revendication 5, où l'on prévoit le dispositif de retenue (36) sur la baguette (18) de sorte que, dans un où la baguette (18) est inséré dans l'espace de logement (16), le clip de fixation (36) retienne la baguette (18) par ses branches.

7. Baguette (18) selon l'une quelconque des revendications précédentes, où l'on prévoit une saillie (24) qui s'étend dans une direction sensiblement longitudinale de la baguette (18).

8. Baguette (18) selon l'une quelconque des revendications précédentes, qui est constituée par au moins deux parties de baguette (18a, 18b) dans la direction longitudinale de la baguette (18).

9. Baguette (18) selon l'une quelconque des revendications précédentes, qui est adaptée à être cousue avec un tissu textile (12).

10. Capote (10) pour un véhicule cabriolet, comportant un étrier de tension (14), ledit étrier de tension (14) constituant un espace de logement (16) adapté pour recevoir une baguette (18) selon l'une quelconque des revendications précédentes.

11. Capote (10) selon la revendication 10, comportant un tissu textile (12) qui est cousu avec la baguette (18).
